# EUROPÄISCHE PATENTSCHRIFT

(11) **EP 1 723 709 B1**
(45) Veröffentlichungstag und Bekanntmachung des Hinweises auf die Patenterteilung: **08.04.2009**
(21) Anmeldenummer: 05715019.5
(22) Anmeldetag: 25.02.2005
(51) Int. Cl.: H02J 3/24, H02H 3/46

(54) **EINRICHTUNG ZUR PREVENTION VON GROSSSTÖRUNGEN IN ELEKTRISCHEN VERSORGUNGSNETZEN**
DEVICE FOR THE PREVENTION OF SERIOUS FAULTS IN ELECTRICAL MAINS SUPPLY NETWORKS
DISPOSITIF DE PREVENTION DE GRANDES PANNES DANS DES RESEAUX D'ALIMENTATION ELECTRIQUE

(30) Priorität: 08.03.2004 DE 102004011551
(43) Veröffentlichungstag der Anmeldung: 22.11.2006
(73) Patentinhaber: A. Eberle Gmbh & Co. Kg, 90441 Nürnberg (DE)
(72) Erfinder: HAUSSEL, Werner, 90537 Feucht (DE); FETTE, Michael, 33100 Paderborn (DE); HOFBECK, Martin, 90427 Nürnberg (DE)
(74) Vertreter: Schuhmann, Albrecht
(86) Internationale Anmeldenummer: PCT/DE2005/000315
(87) Internationale Veröffentlichungsnummer: WO 2005/088802

(56) Entgegenhaltungen:
- EP-A- 0 671 067
- WO-A-01/93405
- WO-A-96/35250
- DE-A1- 3 742 555
- US-A- 4 384 246
- US-B1- 6 456 947

## Beschreibung

Die vorliegende Erfindung betrifft eine Einrichtung zur Prävention von Großstörungen in elektrischen Versorgungsnetzen mit den Merkmalen des Oberbegriffs des Anspruchs 1.

In den letzten Jahren hat sich die Forschung verstärkt mit der Dynamik von elektrischen Versorgungsnetzen auseinander gesetzt. Hierbei interessiert im Besonderen die Analyse nichtlinearer Systeme um Aussagen über die Stabilität von elektrischen Versorgungsnetzen treffen zu können. In dem IEEE-Report "Voltage Stability Assessment: Concepts, Practices and Tools, August 2002" sind hierzu einige Ergebnisse zusammengefasst und wesentliche Literaturstellen genannt.

Die Quintessenz dieser Untersuchungen und weiterer Simulationen und Analysen an Netzmodellen haben ergeben, dass bestimmte Anregungen in einem Elektroenergiesystem dynamische Ausgleichsvorgänge mit charakteristischen Eigenschaften erzeugen. Diese gilt es zu erkennen, um das anregende Ereignis zu identifizieren. Des weiteren hat sich ergeben, dass sich Kollapsphänomene, die zu Großstörungen führen können, sich immer durch eine Reihe von zuvor identifizierbarer dynamischer Ereignisse ankündigen. Der besondere Einfluss der Lastdynamiken auf die Stabilitätsgrenzen und die Schwingungsdynamiken wurde durch Bifurkationsanalysen ermittelt.

Spielraum zur Prävention von Großstörungen bietet die Tatsache, dass der Kollaps erst 15 s bis 300 s nach den identifizierbaren dynamischen Ereignissen auftritt. Während dieser Zeit tritt ein unterlagerter Driftprozess, ein stetiges Ansteigen oder Abfallen des Spannungsbetrages auf.

Aus der WO 96/35250 ist eine Einrichtung zum Detektieren von Funkentladungen auf elektrischen Energieleitungen, um damit vor potentiellen Störungen zu warnen, bekannt. Es wird eine Frequenzanalyse mittels Filtern durchgeführt und auf eine Funkenentladung geschlossen, falls hochfrequente breitbandige Störsignale erkannt werden.

Erfindungsgemäß werden demgegenüber die der Großstörung vorausgehenden dynamischen Ausgleichsvorgänge durch eine Spektralanalyse der Spannung betrachtet. Dabei ist es besonders wichtig das Spektrum in mehrere Frequenzintervallklassen zu unterteilen. Die Frequenzintervallklassen müssen so unterteilt sein, dass sich die verschiedenen Störungsarten durch signifikante Unterschiede in den Frequenzintervallklassen abbilden lassen.

Auf Grund der Simulationen und Analysen von Netzmodellen und der Auswertung von Literatur werden die Frequenzintervallklassen für Netze mit der Nennfrequenz von 50 Hz wie folgt festgelegt:

| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Frequenz/ | ≥ 0,0 | ≥ 0,3 | ≥ 0,7 | ≥1,1 | ≥ 2,0 | ≥ 2,5 | ≥4,0 | ≥14,0 | ≥20,0 | ≥29,0 | ≥35,0 | ≥49,9 | ≥50,1 |
| Hz | < 0,3 | < 0,7 | < 1,1 | < 2,0 | < 2,5 | < 4,0 | <14,0 | <20,0 | <29,0 | <35,0 | <49,9 | <50,1 | |

Für Netze mit der Nennfrequenz von 60 Hz werden die Frequenzintervallklassen wie folgt festgelegt:

| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Frequenz/ | ≥ 0,0 | ≥ 0,3 | ≥ 0,7 | ≥1,1 | ≥ 2,0 | ≥ 2,5 | ≥4,0 | ≥14,0 | ≥20,0 | ≥29,0 | ≥35,0 | ≥59,9 | ≥60,1 |
| Hz | < 0,3 | < 0,7 | < 1,1 | < 2,0 | < 2,5 | < 4,0 | <14,0 | <20,0 | <29,0 | <35,0 | <59,9 | <60,1 | |

In besonderen Fällen ist es nötig, die Frequenzintervallklassen adaptiv an die Last- und Schwingungsdynamik des Netzes anzupassen. Hierzu müssen online Bifurkationsanalysen durchgeführt werden.

Die Erkennung und Analyse von Störungen beruht erfindungsgemäß darauf, dass zugehörig zu den verschiedenen Störungen bestimmte Frequenzintervallklassen-Referenzmuster auftreten. Beispiele solcher Muster:
Zwischensystemschwingungen

| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Muster | 1 | 1 | 0 | 0 | 0 | 0 | 0 | 0 | 0 | 0 | 0 | 0 | 0 |

Lokal begrenzte Oszillationen

| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Muster | 0 | 0 | 1 | 1 | 1 | 0 | 0 | 0 | 0 | 0 | 0 | 0 | 0 |

Mode 1 Torsionsschwingungen

| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Muster | 0 | 0 | 0 | 0 | 0 | 0 | 0 | 1 | 0 | 0 | 0 | 0 | 0 |

Supersynchrone Moden Torsionsschwingungen

| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Muster | 0 | 0 | 0 | 0 | 0 | 0 | 1 | 1 | 1 | 0 | 0 | 0 | 1 |

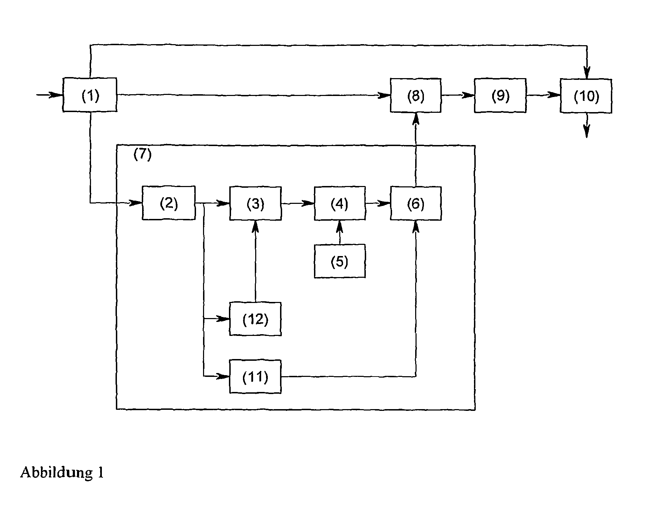

Die Einrichtung zur Prävention von Großstörungen in elektrischen Versorgungsnetzen (7) (Abb. 1) besteht aus dem A-D-Wandler (2), die die Spannung des Drehstromnetzes (1) abtastet und die Abtastwerte der Spektralanalyse-Einrichtung (3) und der Spannungsmesseinrichtung (11) zur Verfügung stellt. Die Spektralanalyse-Einrichtung (3) errechnet die den einzelnen Frequenzintervallen zugehörigen Spannungswerte des zu analysierenden Spektrums und gibt diese an den Vergleicher (4) weiter. Dieser vergleicht diese Intervallwerte mit den oben genannten abgelegten Frequenz-Mustern (5) in Verbindung mit einstellbaren Grenzwerten für die Intervallwerte. Ergibt der Vergleich ein Vorliegen einer Störung, wird das Signal an die Auswerte-Einrichtung (6) weitergegeben, in der die Strategie der Störbehandlung festgelegt ist. Zur Adaption der Frequenintervallklassen bezüglich ihrer Frequenzgrenzwerte werden die Abtastwerte an einen Bifurkationsanalysator (12) übergeben, der dann der Spektralanalyse-Einrichtung (3) die neuen Frequenzgrenzen übergibt.

Zur Beurteilung der unterlagerten Driftprozesse werden die Abtastwerte über die Spannungsmesseinrichtung (11) der Auswerte-Einrichtung (6) zugeführt. Die spezifische Nennfrequenz eines Netzes wird ebenfalls mit der Spektralanalyse-Einrichtung (3) ermittelt.

Für die Strategie der Störbehandlung gibt es verschiedene Möglichkeiten. Zum einen können Meldungen durch visuelle Anzeigen, Relaisausgänge oder entsprechende Kommunikations-Schnittstellen abgegeben werden. Zum Anderen kann über die Relaisausgänge und/oder den Kommunikationsschnittstellen der Vorrichtung in die Spannungsregelung (8) über den Stufenschalter (9) des Transformators (10) eingegriffen werden. Bei einem Erkennen einer möglichen Großstörung kann der Regler entweder stillgesetzt werden oder einen Sollwert an der untersten möglichen Grenze annehmen, um dem bevorstehenden Kollaps entgegenzuwirken.

Die Einrichtung zur Prävention von Großstörungen in elektrischen Versorgungsnetzen (7) und der Regler (8) können aber auch über entsprechende Kommunikationsschnittstellen in Netzführungskonzepte für eine koordinierte Störungsbehandlung eingebunden werden, indem die Einrichtung (7) stillgesetzt wird oder deren Informationen abgerufen und im Leit- oder SCADA-System verarbeitet werden und der Regler in einen Master-Mode gesetzt und die Sollwertvorgabe vom Leit- oder SCADA-System vorgenommen wird.

## Patentansprüche

1. Einrichtung zur Prävention von Großstörungen in elektrischen Versorgungsnetzen (7) durch Spektralanalyse der Netzspannung
**dadurch gekennzeichnet,**
**dass** das durch einen Spannungs-A-D-Wandler (2) und eine Spektalanalyse-Einrichtung (3) ermittelte Spektrum einer Klassifikation nach Frequenzintervallen unterzogen wird;
**dass** in einem Vergleicher (4) die Werte der Frequenzintervallklassen mit den bestimmten Störungen zugeordneten Frequenzintervallklassen-Referenzmustern korreliert werden;
und **dass** eine Auswerte-Einrichtung (6) bei Erkennen einer Störung ein Signal, eine oder mehrere Relais-Meldungen oder eine oder mehrere Meldungen über Kommunikationsschnittstellen abgibt.

2. Einrichtung zur Prävention von Großstörungen in elektrischen Versorgungsnetzen nach Anspruch 1
**dadurch gekennzeichnet,**
**dass** die Frequenzen in 13 wie folgend festgelegten Intervallklassen mit Frequenzgrenzwerten unterteilt sind:
(Netzfrequenz 50 Hz)
| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Frequenz/ | ≥ 0,0 | ≥ 0,3 | ≥ 0,7 | ≥1,1 | ≥ 2,0 | ≥ 2,5 | ≥4,0 | ≥14,0 | ≥20,0 | ≥29,0 | ≥35,0 | ≥49,9 | ≥50,1 |
| Hz | < 0,3 | < 0,7 | < 1,1 | < 2,0 | < 2,5 | < 4,0 | <14,0 | <20,0 | <29,0 | <35,0 | <49,9 | <50,1 | |
bzw.
(Netzfrequenz 60 Hz)
| Intervall-Klasse | 1 | 2 | 3 | 4 | 5 | 6 | 7 | 8 | 9 | 10 | 11 | 12 | 13 |
|---|---|---|---|---|---|---|---|---|---|---|---|---|---|
| Frequenz/ | ≥ 0,0 | ≥ 0,3 | ≥ 0,7 | ≥1.1 | ≥ 2,0 | ≥ 2,5 | ≥4,0 | ≥14,0 | ≥20,0 | ≥29,0 | ≥35,0 | ≥59,9 | ≥60,1 |
| Hz | < 0,3 | < 0,7 | < 1,1 | < 2,0 | < 2,5 | < 4,0 | <14,0 | <20,0 | <29,0 | <35,0 | <59,9 | <60,1 | |

3. Einrichtung zur Prävention von Großstörungen in elektrischen Versorgungsnetzen nach Anspruch 1
**dadurch gekennzeichnet,**
**dass** die Frequenzgrenzwerte und die Anzahl der Frequenzenintervallklassen über den Bifurkationsanalysator (12) adaptiv an die örtliche Last- und Schwingungsdynamik des Netzes angepasst wird.

4. Einrichtung zur Prävention von Großstörungen in elektrischen Versorgungsnetzen nach Anspruch 1
**dadurch gekennzeichnet,**
**dass** der Vergleicher (4) mit parametrierbaren Grenzwerten der Intervallspannung für jedes Frequenzintervall ausgerüstet ist.

5. Einrichtung zur Prävention von Großstörungen in elektrischen Versorgungsnetzen nach Anspruch 1 und 3
**dadurch gekennzeichnet,**
**dass** sich die Grenzwerte der Intervallspannung selbstständig an die Lastverhältnisse des Netzes anpassen.

6. Einrichtung zur Prävention von Großstörungen in elektrischen Versorgungsnetzen nach Anspruch 1
**dadurch gekennzeichnet,**
**dass** die Auswerte-Einrichtung (6) bei Erkennen einer Störung ein visuelles Signal abgibt.

7. Einrichtung zur Prävention von Großstörungen in elektrischen Versorgungsnetzen nach einem der vorhergehenden Ansprüche,
**dadurch gekennzeichnet,**
**dass** die Auswerte-Einrichtung (6) Relais-Meldungen und/oder Meldungen über Kommunikationsschnittstellen abgibt, die eine Spannungsregelung (8) insofern beeinflußt, dass sich der Regler still setzt oder auf einen anderen Sollwert regelt.

8. Einrichtung zur Prävention von Großstörungen in elektrischen Versorgungsnetzen nach einem der Ansprüche 1 bis 6,
**dadurch gekennzeichnet,**
**dass** die Abtastwerte über die Spannungsmesseinrichtung (11) der Auswerte-Einheit (6) zugeführt werden.

9. Einrichtung zur Prävention von Großstörungen in elektrischen Versorgungsnetzen nach einem der Ansprüche 1 bis 7
**dadurch gekennzeichnet,**
**dass** die Auswerte-Einrichtung (6) nach Auftreten einer Erkennung einer Störung zur Beurteilung der Störung zusätzlich den langfristigen Verlauf der Netzspannung überwacht.

10. Einrichtung zur Prävention von Großstörungen in elektrischen Versorgungsnetzen nach Anspruch 9,
**dadurch gekennzeichnet,**
**dass** in der Auswerte-Einrichtung (6) Parameter für den Gradienten der Netzspannung eingegeben werden können.

11. Einrichtung zur Prävention von Großstörungen in elektrischen Versorgungsnetzen nach einem der vorhergehenden Ansprüche,
**dadurch gekennzeichnet ist,**
**dass** übergeordnete Leit- und SCADA-Systeme über die Kommunikationsschnittstellen die Einrichtung stillsetzen können.

## Claims

1. Device for the prevention of major faults in electrical mains supply networks (7) by spectral analysis of the network voltage **characterized in that** the spectrum, which is determined by means of a voltage A/D converter (2) and a spectral analysis device (3), is subjected to classification on the basis of frequency intervals;
**in that** the values of the frequency interval classes are correlated in a comparator (4) with frequency-interval-class reference patterns associated with the specific faults;
and **in that** an evaluation device (6) emits a signal, one or more relay messages or one or more messages via communication interfaces on identification of a fault.

2. Device for the prevention of major faults in electrical mains supply networks according to Claim 1,
**characterized**
**in that** the frequencies are subdivided into 13 interval classes, which are defined as follows, with frequency limit values:
(Network frequency 50 Hz)
| Interval class | 1 | 2 | 3 | 4 | 5 | 6 | 7 | 8 | 9 | 10 | 11 | 12 | 13 |
|---|---|---|---|---|---|---|---|---|---|---|---|---|---|
| Frequency/ | ≥0.0 | ≥0.3 | ≥0.7 | ≥1.1 | ≥2.0 | ≥2.5 | ≥4.0 | ≥14.0 | ≥20.0 | ≥29.0 | ≥35.0 | ≥49.9 | ≥50.1 |
| Hz | <0.3 | <0.7 | <1.1 | <2.0 | <2.5 | <4.0 | <14.0 | <20.0 | <29.0 | <35.0 | <49.9 | <50.1 | |
and
(Network frequency 60 Hz)
| Interval class | 1 | 2 | 3 | 4 | 5 | 6 | 7 | 8 | 9 | 10 | 11 | 12 | 13 |
|---|---|---|---|---|---|---|---|---|---|---|---|---|---|
| Frequency/ | ≥0.0 | ≥0.3 | ≥0.7 | ≥1.1 | ≥2.0 | ≥2.5 | ≥4.0 | ≥14.0 | ≥20.0 | ≥29.0 | ≥35.0 | ≥59.9 | ≥60.1 |
| Hz | <0.3 | <0.7 | <1.1 | <2.0 | <2.5 | <4.0 | <14.0 | <20.0 | <29.0 | <35.0 | <59.9 | <60.1 | |

3. Device for the prevention of major faults in electrical mains supply networks according to Claim 1,
**characterized**
**in that** the frequency limit values and the number of frequency interval classes are adaptively matched to the local load and oscillation dynamics of the network by means of the bifurcation analyser (12).

4. Device for the prevention of major faults in electrical mains supply networks according to Claim 1,
**characterized**
**in that** the comparator (4) is equipped with configurable limit values of the interval voltage for each frequency interval.

5. Device for the prevention of major faults in electrical mains supply networks according to Claims 1 and 3,
**characterized**
**in that** the limit values of the interval voltage are automatically matched to the load conditions in the network.

6. Device for the prevention of major faults in electrical mains supply networks according to Claim 1,
**characterized**
**in that** the evaluation device (6) emits a visual signal on identification of a fault.

7. Device for the prevention of major faults in electrical mains supply networks according to one of the preceding claims,
**characterized**
**in that** the evaluation device (6) emits relay messages and/or messages via communication interfaces, and influences voltage regulation (8) such that the regulator is shut down or is regulated at a different set value.

8. Device for the prevention of major faults in electrical mains supply networks according to one of Claims 1 to 6,
**characterized**
**in that** the sample values are supplied to the evaluation unit (6) via the voltage measurement device (11).

9. Device for the prevention of major faults in electrical mains supply networks according to one of Claims 1 to 7,
**characterized**
**in that** the evaluation device (6) additionally monitors the long-term waveform of the network voltage after a fault is identified, in order to assess the fault.

10. Device for the prevention of major faults in electrical mains supply networks according to Claim 9,
**characterized**
**in that** parameters for the gradient of the network voltage can be entered in the evaluation device (6).

11. Device for the prevention of major faults in electrical mains supply networks according to one of the preceding claims,
**characterized**
**in that** superordinate control and SCADA systems can shut down the device via the communication interfaces.

## Revendications

1. Dispositif pour la prévention de perturbations importantes dans des réseaux d'alimentation électrique (7) par analyse spectrale de la tension de réseau
**caractérisé en ce que,**
le spectre déterminé par un convertisseur analogique/numérique de tension (2) et par un dispositif d'analyse spectrale (3) est soumis à une classification après des intervalles de fréquence ;
dans un comparateur (4), les valeurs des classes d'intervalles de fréquence sont mises en corrélation avec des modèles de référence pour les classes d'intervalles de fréquence associés à des perturbations précises ;
et **en ce qu'**à l'identification d'une perturbation, un dispositif d'évaluation (6) délivre un signal, un ou plusieurs messages relais ou un ou plusieurs messages via des interfaces de communication.

2. Dispositif pour la prévention de perturbations importantes dans des réseaux d'alimentation électrique selon la revendication 1,
**caractérisé en ce que**
les fréquences sont divisées en 13 classes d'intervalles fixées comme suit, avec des valeurs limites de fréquence :
(Fréquence réseau 50 Hz)
| Classe d'intervalles | 1 | 2 | 3 | 4 | 5 | 6 | 7 | 8 | 9 | 10 | 11 | 12 | 13 |
|---|---|---|---|---|---|---|---|---|---|---|---|---|---|
| Fréquence/ | ≥0,0 | ≥0,3 | ≥0,7 | ≥1,1 | ≥2,0 | ≥2,5 | ≥4,0 | ≥14,0 | ≥20,0 | ≥29,0 | ≥35,0 | ≥49,9 | |
| Hz | <0,3 | <0,7 | <1,1 | <2,0 | <2,5 | <4,0 | <14, | <20,0 | <29,0 | <35,0 | <49,9 | <50,1 | ≥50,1 |
(Fréquence réseau 60 Hz)
| Classe d'intervalles | 1 | 2 | 3 | 4 | 5 | 6 | 7 | 8 | 9 | 10 | 11 | 12 | 13 |
|---|---|---|---|---|---|---|---|---|---|---|---|---|---|
| Fréquence/ | ≥0,0 | ≥0,3 | ≥0,7 | ≥1,1 | ≥2,0 | ≥2,5 | ≥4,0 | ≥14,0 | ≥20,0 | ≥29,0 | ≥35,0 | ≥59,9 | |
| Hz | <0,3 | <0,7 | <1,1 | <2,0 | <2,5 | <4,0 | <14,0 | <20,0 | <29,0 | <35,0 | <59,9 | <60,1 | ≥60,1 |

3. Dispositif pour la prévention de perturbations importantes dans des réseaux d'alimentation électrique selon la revendication 1,
**caractérisé en ce que**
les valeurs limites de fréquence et le nombre de classes d'intervalles de fréquence sont ajustés de façon adaptative par l'intermédiaire d'analyseurs de bifurcations (12) à la dynamique de charge et d'oscillation locale du réseau.

4. Dispositif pour la prévention de perturbations importantes dans des réseaux d'alimentation électrique selon la revendication 1,
**caractérisé en ce que**
le comparateur (4) est doté de valeurs limites paramétrables de la tension d'intervalle pour chaque intervalle de fréquence.

5. Dispositif pour la prévention de perturbations importantes dans des réseaux d'alimentation électrique selon la revendication 1 et 3,
**caractérisé en ce que,**
les valeurs limites de la tension d'intervalle s'adaptent automatiquement aux conditions de charge du réseau.

6. Dispositif pour la prévention de perturbations importantes dans des réseaux d'alimentation électrique selon la revendication 1,
**caractérisé en ce que**
à l'identification d'une perturbation, le dispositif d'évaluation (6) délivre un signal visuel.

7. Dispositif pour la prévention de perturbations importantes dans des réseaux d'alimentation électrique selon l'une quelconque des revendications précédentes,
**caractérisé en ce que,**
le dispositif d'évaluation (6) délivre des messages relais et/ou des messages via des interfaces de communication influençant une régulation de tension (8) dans la mesure où le mécanisme régulateur se met à l'arrêt ou procède à un réglage sur une autre valeur de consigne.

8. Dispositif pour la prévention de perturbations importantes dans des réseaux d'alimentation électrique selon l'une quelconque des revendications 1 à 6,
**caractérisé en ce que,**
les valeurs de balayage sont acheminées via le dispositif de mesure de la tension (11) vers l'unité d'évaluation (6).

9. Dispositif pour la prévention de perturbations importantes dans des réseaux d'alimentation électrique selon l'une quelconque des revendications 1 à 7,
**caractérisé en ce que,**
après la production d'une identification de perturbation, pour apprécier ladite perturbation, le dispositif d'évaluation (6) supervise en outre la courbe à long terme de la tension de réseau.

10. Dispositif pour la prévention de perturbations importantes dans des réseaux d'alimentation électrique selon la revendication 9,
**caractérisé en ce que,**
dans l'unité d'évaluation (6) peuvent être saisis des paramètres pour le gradient de la tension de réseau.

11. Dispositif pour la prévention de perturbations importantes dans des réseaux d'alimentation électrique selon l'une quelconque des revendications précédentes,
**caractérisé en ce que,**
des systèmes de commande et des systèmes SCADA directeurs sont susceptibles de mettre le dispositif à l'arrêt via les interfaces de communication.
